# EUROPEAN PATENT SPECIFICATION

(11) **EP 2 772 593 B1**
(45) Date of publication and mention of the grant of the patent: **16.08.2017**
(21) Application number: 13177746.8
(22) Date of filing: 24.07.2013
(51) Int. Cl.: E03D 9/08, E03C 1/10

(54) **Vacuum breaker, automatic flushing system for toilet, and electronic bidet toilet**
Rückflussverhinderer, automatisches Spülsystem für Toilette und elektronische Bidettoilette
Disjoncteur à vide, système de chasse d'eau automatique pour toilettes et toilettes avec bidet électronique

(30) Priority: 01.03.2013 CN 201320093841 U
(43) Date of publication of application: 03.09.2014
(73) Proprietor: Duravit Aktiengesellschaft, 78132 Hornberg (DE)
(72) Inventor: Ping, Zhixiong, 201107 Shanghai (CN); Ying, Weimin, 201107 Shanghai (CN)
(74) Representative: Blaumeier, Jörg

(56) References cited:
- EP-A2- 2 192 242
- US-A- 2 730 117
- US-A- 5 038 814

## Description

### Technical Field

The present application relates to an electric bidet toilet (EBT), and in particular to a vacuum breaker provided in an automatic flushing system for the EBT.

### Description of the Related Art

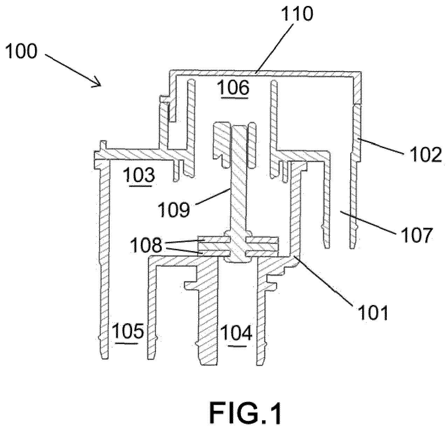

In an automatic flushing system for EBT, a vacuum breaker is disposed in a water inlet pipe to prevent reflux of waste water caused by negative pressure in the pipe. Fig. 1 shows a vacuum breaker 100 applied in an automatic flushing system for toilet. The vacuum breaker 100 comprises a body 101 and a cover 102 which cooperate to define a cavity 103. A water inlet 104 and a water outlet 105 are formed in the body 101. An air port 106 and an overflow hole 107 in communication therewith are formed in the cover 102. A gasket 108 and a gasket fixation shaft 109 are disposed within the cavity 103. When a negative pressure occurs in the water inlet pipe, external air is introduced into the cavity 103 through the air port 106, such that the gasket 108 closes the water inlet 104 so as to prevent the waste water from refluxing into the water inlet pipe. A waterproof cap 110 is disposed above the cover 102 to prevent a splash of water from the air port 106 and the overflow hole 107.

In the vacuum breaker 100 shown in Fig. 1, a tip portion (upper end portion) of an inlet pipe section which defines the water inlet 104 is substantially level with a bottom of the cavity 103 and does not extend further into the cavity 103, and a substantial portion of the gasket fixation shaft 109 is above the gasket 108. This structure results in a low critical level (CL) line of the toilet, makes it difficult to meet the requirement of certifications, such as cUPC certification, and brings about a large volume of the vacuum breaker. In addition, the waterproof cap 110 is separately molded and then assembled to the cover 102, which increases manufacturing and assembling cost.

A vacuum breaker comprising the features of the preamble of claim 1 is disclosed for example in US 5 038 814 A or US 2 730 117 A.

### Summary of the Utility Model

An objective of the present application is to provide a vacuum breaker applicable in an automatic flushing system for toilet, which can raise the CL line during refluxing so as to meet the requirement of certifications. Another objective of the present utility model is to reduce the size of the vacuum breaker. A further objective of the present utility model is to reduce the cost of the vacuum breaker.

A first aspect of the present application provides a vacuum breaker comprising a body and a cover which cooperate to define a cavity, the body being integrally formed with an inlet pipe section which defines a water inlet and an outlet pipe section which defines a water outlet, the cover being formed with an air port, wherein a tip portion of the inlet pipe section extends into the cavity in a direction towards the air port, characterized by further comprises a gasket movable between a first position for closing the water inlet and a second position for closing the air port and a gasket fixation shaft for fixing the gasket, the gasket fixation shaft extending downward into the inlet pipe section.

Preferably, the length of a portion of the inlet pipe section which extends within the cavity is greater than half of the height of the cavity. More preferably, the tip portion of the inlet pipe section extends within the cavity up to the proximity of the air port.

In a favorable embodiment, the cover is integrally formed with a waterproof cap located above the air port.

In another favorable embodiment, the vacuum breaker is further provided with an overflow hole in communication with the air port, and the cover is integrally formed with a waterproof sheet located above the overflow hole.

In a further favorable embodiment, the vacuum breaker is further provided with an overflow hole in communication with the air port, and the cover is integrally formed with a waterproof cap located above the air port and a waterproof sheet located above the overflow hole.

A second aspect of the present application provides an automatic flushing system for toilet comprising any one of the above vacuum breakers.

A third aspect of the present application provides an EBT having the above automatic flushing system for toilet.

According to the present application as compared with the prior art in which the tip portion of the inlet pipe is substantially level with the bottom of the cavity of the vacuum breaker, because the tip portion of the inlet pipe section extends into the cavity in a direction towards the air port, the level of the water inlet is elevated, so that the CL line during refluxing is raised. The greater the length of the portion of the inlet pipe section extending within the cavity is, the higher the CL line is, so that it is easier to meet the requirement of certifications.

In addition, the size of the vacuum breaker is reduced by arranging the gasket fixation shaft to extend downward into the inlet pipe section.

Also, the cost is reduced and assembling process is simplified by integrally forming the cover of the vacuum breaker with the waterproof cap located above the air port and/or the waterproof sheet located above the overflow hole.

### Brief Description of the Drawings

Fig. 1 is a schematic sectional view of a vacuum breaker of prior art.
Fig. 2 is a schematic view of an automatic flushing system for toilet according to an embodiment of the present application.
Fig. 3 is a schematic sectional view of a vacuum breaker according to an embodiment of the present application.
Fig. 4 is a schematic sectional view of a vacuum breaker according to another embodiment of the present application.
Fig. 5 is a perspective view of the vacuum breaker of Fig. 4.

### Detailed Description of Preferred Embodiments

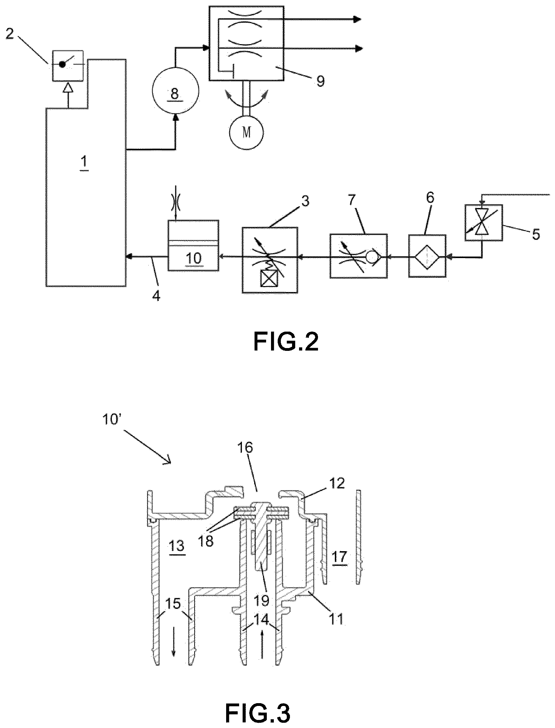

Fig. 2 schematically shows an automatic flushing system for toilet according to an embodiment of the present application. The automatic flushing system for toilet according to the present application may be applied to an EBT capable of automatically flushing after use of the toilet by a user. For example, an infrared inductive probe may be provided on the front side wall of water tank to initiate flushing when detecting that the user has just left after using the toilet. As an alternative, a pressure sensor may be provided at the bottom of the toilet seat to detect seating on the toilet seat and leaving of a user and to accordingly initiate flushing.

The automatic flushing system for toilet comprises a tank 1. As shown in Fig. 2, a float switch 2, which is connected with a float inside the tank 1, is attached to the tank 1. After flushing, water level in the tank 1 is lowered and the float accordingly drops due to the gravity. Then, the float switch 2 is turned on and an electromagnetic inlet valve 3 is correspondingly opened, and tap water from a water supply pipe flows into the tank 1 through a water inlet line 4. With increase of water inside the tank 1, the float rises as the floating force overcomes the gravity force. When the float rises up to a predetermined water level, the float switch 2 is turned off and the electromagnetic inlet valve 3 is correspondingly closed, and water inflow of the tank 1 is stopped.

A master shutoff valve 5, a filter 6 and a non-return flux valve 7 are disposed between the water supply line and the electromagnetic inlet valve 3. A flushing port of the tank 1 is connected to a distribution valve 9 via a pressure pump 8. The distribution valve 9 switches water from the tank 1 under control of a stepper motor M, such that the water selectively flows to a rim outlet or a jet outlet of the toilet bowl. The structures and functions of these components are well-known to those skilled in the art and thus detailed description thereof is omitted herein.

In order to prevent reflux of waste water in the water inlet line 4 when a negative pressure occurs due to various reasons, a vacuum breaker 10 is disposed in the water inlet line 4. With reference to Figs. 3-5, two schematic embodiments of the vacuum breaker of the present utility model will be described in detail below.

In the embodiment shown in Fig. 3, a vacuum breaker 10' includes a body 11 and a cover 12. The body 11 and the cover 12 cooperate to define a cavity 13. The body 11 is formed with an inlet pipe section 14 which defines a water inlet and which can be connected with a water inlet hose downstream of the electromagnetic valve 3, and an outlet pipe section 15 which defines a water outlet and which can be connected with a hose leading to the tank 1. An air port 16 and an overflow hole 17 in communication with the air port 16 are formed in the cover 12. Superfluous water in the vacuum breaker 10' may flow to the jet outlet or the rim outlet of the toilet bowl via the overflow hole 17 and an overflow line connected thereto. A gasket 18 movable between a first position for closing the water inlet and a second position for closing the air port 16 and a gasket fixation shaft 19 for fixing the gasket 18 are disposed within the cavity 13.

The vacuum breaker 10' works in the same way as the vacuum breaker of the prior art. Normally, the gasket 18, due to its gravity and gravity of the gasket fixation shaft 19, abuts against the upper end of the inlet pipe section 14. When water is required to flow into the tank 1, the electromagnetic inlet valve 3 is opened, and the pressure of tap water urges the gasket 18 and the gasket fixation shaft 19 to move upward, so as to open the water inlet and close the air port 16. The tap water flowing into the cavity 13 via the water inlet flows out via the water outlet and into the tank 1. When negative pressure occurs in the water inlet line, external air is introduced into the cavity 13 via the air port 16 so as to prevent a siphon phenomenon, and air pressure presses the gasket 18 against the upper end the inlet pipe section to close the water inlet. Thus, it is possible to effectively prevent waste water from refluxing to the water inlet line.

As shown in Fig. 3, the tip portion (i.e. upper end portion) of the inlet pipe section 14 of the vacuum breaker 10' extends almost throughout the cavity 13 up to the proximity of the air port 16. As compared with the vacuum breaker 100 shown in Fig. 1, the level of the water inlet is elevated, so that the CL line during refluxing is raised.

In addition, because the gasket fixation shaft 19 is arranged in such a manner that a substantial portion of the gasket fixation shaft 19 extends downward into the inlet pipe section 14, the size of the vacuum breaker 10' is reduced. Moreover, as compared with the vacuum breaker 100 shown in Fig. 1, it is easy to form structures on an inner wall of the inlet pipe section 14 to guide and support the gasket fixation shaft 19, for example, a plurality of ribs which are circumferentially spaced.

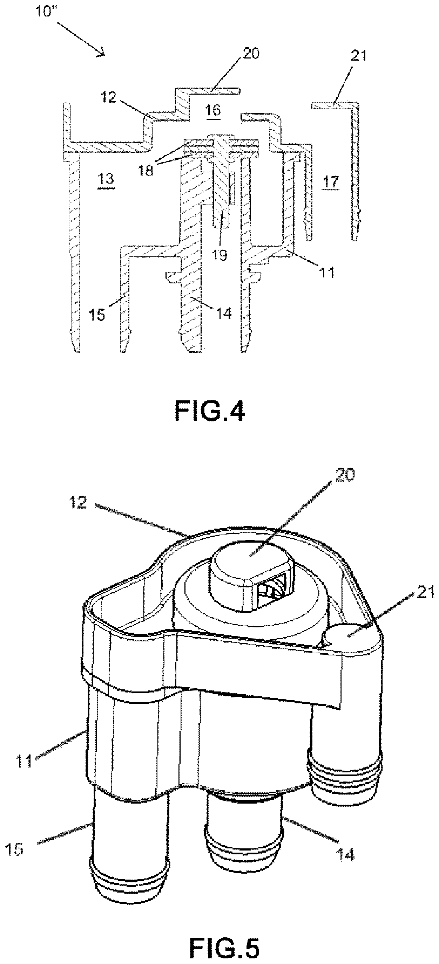

The vacuum breaker 10" shown in Fig. 4 differs from the vacuum breaker 10' shown in Fig. 3 mainly in that a waterproof cap 20 is disposed above the air port 16 and a waterproof sheet 21 is disposed above the overflow hole 17, so that water splashing from the air port 16 or the overflow hole 17 can be reliably prevented. Unlike the waterproof cap 110 separately molded from the cover 102 in the vacuum breaker 100 of Fig. 1, the waterproof 20 and the waterproof sheet 21 in this embodiment are integrally formed with the cover 12 of the vacuum breaker 10". Thus, manufacturing cost is reduced, and a step of assembling the waterproof cap or waterproof sheet onto the cover of the vacuum breaker is omitted.

Fig. 5 is a perspective view of the vacuum breaker 10" shown in Fig. 4, illustrating the entire structure of the vacuum breaker. The perspective view of the vacuum breaker 10' (which does not have the waterproof cap 20 and the waterproof sheet 21) shown in Fig. 3 is easily conceivable from Fig. 5.

Although both the waterproof cap 20 and the waterproof sheet 21 are provided in the embodiment of Figs. 4 and 5, it is possible to integrally form only one of the waterproof cap 20 and the waterproof sheet 21 on the cover 12.

In each of the above embodiments, the tip portion (i.e. upper end portion) of the inlet pipe section 14 of the vacuum breaker extends almost throughout the cavity 13 up to the proximity of the air port 16. However, the present utility model is not limited to this. As compared with the prior art, the technical effects of raising the CL line can be achieved as long as the tip portion of the inlet pipe section 14 extends at a distance within the cavity 13 in a direction towards the air port 16. For instance, the length of a portion of the inlet pipe section which extends within the cavity may be greater than half of the height of the cavity.

While the preferred embodiments of the present utility model have been described hereinabove, they shall not be construed as limiting or restricting this utility model, and various improvements and modifications may be made by those skilled in the art without departing from the scope of the present utility model. Other embodiments can also be obtained by those skilled in the art with reference to the disclosure herein. The description and the embodiments shall be considered as exemplary only, and the true scope of this application is defined by the annexed claims and their equivalents.

## Claims

1. A vacuum breaker, comprising a body (11) and a cover (12) which cooperate to define a cavity (13), the body (11) being integrally formed with an inlet pipe section (14) which defines a water inlet and an outlet pipe section (15) which defines a water outlet, the cover (12) being formed with an air port (16), wherein a tip portion of the inlet pipe section (14) extends into the cavity (13) in a direction towards the air port (16), **characterized by** further comprising a gasket (18) movable between a first position for closing the inlet pipe section (14) defining a water inlet and a second position for closing the air port (16) and a gasket fixation shaft (19) for fixing the gasket (18), the gasket fixation shaft (19) extending downward into the inlet pipe section (14).

2. The vacuum breaker according to claim 1, **characterized in that** the length of a portion of the inlet pipe section (14) which extends within the cavity (13) is greater than half of the height of the cavity (13).

3. The vacuum breaker according to claim 2, **characterized in that** the tip portion of the inlet pipe section (14) extends within the cavity (13) up to the proximity of the air port (16).

4. The vacuum breaker according to any one of claims 1-3, **characterized in that** the cover (12) is integrally formed with a waterproof cap (20) located above the air port (16).

5. The vacuum breaker according to any one of claims 1-4, **characterized in that** an overflow hole (17) in communication with the air port (16) is further provided, wherein the cover (12) is integrally formed with a waterproof sheet (21) located above the overflow hole (17).

6. The vacuum breaker according to any one of claims 1-3 **characterized in that** an overflow hole (17) in communication with the air port (16) is further provided, wherein the cover (12) is integrally formed with a waterproof cap (20) located above the air port (16) and a waterproof sheet (21) located above the overflow hole (17).

7. An automatic flushing system for toilet, **characterized by** comprising a vacuum breaker according to any one of claims 1-6.

8. An electronic bidet toilet, **characterized by** having an automatic flushing system for toilet according to claim 7.

## Patentansprüche

1. Rückflussverhinderer, umfassend einen Körper (11) und einen Deckel (12), die zur Definition eines Hohlraums (13) zusammenwirken, wobei der Körper (11) mit einem Einlassrohrabschnitt (14), der einen Wassereinlass definiert, und einem Auslassrohrabschnitt (15), der einen Wasserauslass definiert, integral ausgebildet ist, wobei der Deckel (12) mit einem Luftkanal (16) ausgebildet ist, wobei sich ein Spitzenteil des Einlassrohrabschnitts (14) in einer zu dem Luftkanal (16) verlaufenden Richtung in den Hohlraum (13) erstreckt, **dadurch gekennzeichnet, dass** er ferner eine Dichtung (18), die zwischen einer ersten Position zum Schließen des einen Wassereinlass definierenden Einlassrohrabschnitts (14) und einer zweiten Position zum Schließen des Luftkanals (16) beweglich ist, und einen Dichtungsbefestigungsschaft (19) zum Befestigen der Dichtung (18) umfasst, wobei sich der Dichtungsbefestigungsschaft (19) in den Einlassrohrabschnitt (14) erstreckt.

2. Rückflussverhinderer nach Anspruch 1, **dadurch gekennzeichnet, dass** die Länge eines Teils des Einlassrohrabschnitts (14), die sich im Hohlraum (13) erstreckt, größer als die Hälfte der Höhe des Hohlraums (13) ist.

3. Rückflussverhinderer nach Anspruch 2, **dadurch gekennzeichnet, dass** sich der Spitzenteil des Einlassrohrabschnitts (14) bis zu der Nähe des Luftkanals (16) im Hohlraum (13) erstreckt.

4. Rückflussverhinderer nach einem der Ansprüche 1 - 3, **dadurch gekennzeichnet, dass** der Deckel (12) mit einer wasserdichten Kappe (20), die über dem Luftkanal (16) angeordnet ist, integral ausgebildet ist.

5. Rückflussverhinderer nach einem der Ansprüche 1 - 4, **dadurch gekennzeichnet, dass** ferner ein Überlaufloch (17), das mit dem Luftkanal (16) in Verbindung steht, vorgesehen ist, wobei der Deckel (12) mit einem wasserdichten Flächengebilde (21), das über dem Überlaufloch (17) positioniert ist, integral ausgebildet ist.

6. Rückflussverhinderer nach einem der Ansprüche 1 - 3, **dadurch gekennzeichnet, dass** ferner ein Überlaufloch (17), das mit dem Luftkanal (16) in Verbindung steht, vorgesehen ist, wobei der Deckel (12) mit einer wasserdichten Kappe (20), die über dem Luftkanal (16) positioniert ist, und einem wasserdichten Flächengebilde (21), das über dem Überlaufloch (17) positioniert ist, integral ausgebildet ist.

7. Automatisches Spülsystem für eine Toilette, **dadurch gekennzeichnet, dass** es einen Rückflussverhinderer nach einem der Ansprüche 1 - 6 umfasst.

8. Elektronische Bidettoilette, **dadurch gekennzeichnet, dass** sie ein automatisches Spülsystem für die Toilette nach Anspruch 7 aufweist.

## Revendications

1. Dispositif anti-refoulement comprenant un corps (11) et un couvercle (12) qui coopèrent de façon à définir une cavité (13), le corps (11) étant formé d'un seul tenant avec une section de conduite d'entrée (14) qui définit une entrée d'eau et une section de conduite de sortie (15) qui définit une sortie d'eau, le couvercle (12) étant formé de façon à comporter un orifice de passage d'air (16), une partie terminale de la section de conduite d'entrée (14) s'étendant dans la cavité (13) dans une direction allant vers l'orifice de passage d'air (16), **caractérisé en ce qu'**il comprend en outre un joint d'étanchéité (18) pouvant être déplacé entre une première position pour fermer la section de conduite d'entrée (14) définissant une entrée d'eau et une seconde position pour fermer l'orifice de passage d'air (16) et une tige de fixation de joint d'étanchéité (19) servant à fixer le joint d'étanchéité (18), la tige de fixation de joint d'étanchéité (19) s'étendant vers le bas dans la section de conduite d'entrée (14).

2. Dispositif anti-refoulement selon la revendication 1, **caractérisé en ce que** la longueur d'une partie de la section de conduite d'entrée (14) qui s'étend à l'intérieur de la cavité (13) est supérieure à la moitié de la hauteur de la cavité (13) .

3. Dispositif anti-refoulement selon la revendication 2, **caractérisé en ce que** la partie terminale de la section de conduite d'entrée (14) s'étend à l'intérieur de la cavité (13) jusqu'à proximité de l'orifice de passage d'air (16).

4. Dispositif anti-refoulement selon l'une quelconque des revendications 1 à 3, **caractérisé en ce que** le couvercle (12) est formé d'un seul tenant avec une coiffe étanche à l'eau (20) placée au-dessus de l'orifice de passage d'air (16).

5. Dispositif anti-refoulement selon l'une quelconque des revendications 1 à 4, **caractérisé en ce qu'**un trou de trop-plein (17) en communication avec l'orifice de passage d'air (16) est en outre prévu, le couvercle (12) étant formé d'un seul tenant avec une plaque étanche à l'eau (21) placée au-dessus du trou de trop-plein (17).

6. Dispositif anti-refoulement selon l'une quelconque des revendications 1 à 3, **caractérisé en ce qu'**un trou de trop-plein (17) en communication avec l'orifice de passage d'air (16) est en outre prévu, le couvercle (12) étant formé d'un seul tenant avec une coiffe étanche à l'eau (20) placée au-dessus de l'orifice de passage d'air (16) et avec une plaque étanche à l'eau (21) placée au-dessus du trou de trop-plein (17).

7. Système de chasse automatique pour toilettes, **caractérisé en ce qu'**il comprend un dispositif anti-refoulement selon l'une quelconque des revendications 1 à 6.

8. Toilettes à bidet électroniques **caractérisées en ce qu'**elles comportent un système de chasse automatique pour toilettes selon la revendication 7.
